# EUROPEAN PATENT APPLICATION

(11) **EP 3 708 507 A1**
(43) Date of publication of application: **16.09.2020**
(21) Application number: 20160694.4
(22) Date of filing: 03.03.2020
(51) Int. Cl.: B65B 59/04, B65B 9/12, B65B 9/20

(54) **METHOD FOR PREPARING A PACKAGING MACHINE**

(30) Priority: 14.03.2019 EP 19162709
(71) Applicant: Tetra Laval Holdings & Finance S.A., 1009 Pully (CH)
(72) Inventor: FERRARINI, Filippo, 41126 Modena (IT); CARRERI, Marco, 41124 Modena (IT); RONCAGLIA, Claudio, 41030 San Prospero (IT); FERRARI, Claudio, 42020 Albinea (IT)
(74) Representative: Tetra Pak - Patent Attorneys SE

(57) **Abstract**

There is described a method for preparing a packaging machine (1) for producing packages (2) of a pourable product. The packaging machine (1) comprises at least a tube forming and sealing device (5) configured to form and longitudinally seal a tube (3), a first package forming unit (7) being configured to at least form and transversally seal the tube (3) for obtaining packages (2) and a support structure (8) carrying at least the first package forming unit (7). The support structure (7) comprises at least one fixing element (30) and the first package forming unit (7) comprises at least one coupling element (31) removably engaging with the fixing element (30) . The method comprises at least the steps of detaching the first package forming unit (7) by releasing the coupling element (31) from the fixing element (30) and attaching a replacement package forming unit being configured to form and transversally seal the tube (3) for obtaining packages (2) by removably engaging a respective coupling element (31) of the replacement package forming unit to the fixing element (30).

## Description

### TECHNICAL FIELD

The present invention relates to a method for preparing a packaging machine for producing packages of a pourable product.

### BACKGROUND ART

As is known, many liquid or pourable food products, such as fruit juice, UHT (ultra-high-temperature treated) milk, wine, tomato sauce, etc., are sold in packages made of sterilized packaging material.

A typical example is the parallelepiped-shaped package for liquid or pourable food products known as Tetra Brik Aseptic (registered trademark), which is made by sealing and folding laminated strip packaging material. The packaging material has a multilayer structure comprising a base layer, e.g. of paper, covered on both sides with layers of heat-seal plastic material, e.g. polyethylene. In the case of aseptic packages for long-storage products, such as UHT milk, the packaging material also comprises a layer of oxygen-barrier material (an oxygen-barrier layer), e.g. an aluminum foil, which is superimposed on a layer of heat-seal plastic material, and is in turn covered with another layer of heat-seal plastic material forming the inner face of the package eventually contacting the food product.

Packages of this sort are normally produced on fully automatic packaging machines, which advance a web of packaging material through a sterilization apparatus for sterilizing the web of packaging material at a sterilization station and to an isolation chamber (a closed and sterile environment) in which the sterilized web of packaging material is maintained and advanced. During advancement of the web of packaging material through the isolation chamber, the web of packaging material is folded and sealed longitudinally at a tube forming station to form a tube having a longitudinal seam portion, the tube being further fed along a vertical advancing direction.

In order to complete the forming operations, the tube is filled with a sterilized or sterile-processed pourable product, in particular a pourable food product, and is transversally sealed and subsequently cut along equally spaced transversal cross sections within a package forming unit of the packaging machine during advancement along the vertical advancing direction.

Pillow packages are so obtained within the packaging machine, each pillow package having a longitudinal sealing band, a top transversal sealing band and a bottom transversal sealing band.

A typical packaging machine comprises a conveying device for advancing the web of packaging material along a web advancement path and a tube formed from the web of packaging material along a tube advancement path, a sterilizing apparatus for sterilizing the web of packaging material prior to its formation into the tube, a tube forming and sealing device at least partially arranged within an isolation chamber and being configured to form the tube from the advancing web of packaging material and to longitudinally seal the tube, a filling device for filling the tube with the pourable product and a package forming unit adapted to form, transversally seal and cut the single packages from the tube of packaging material.

A typical packaging machine also comprises a support structure for carrying the package forming unit. The support structure comprises a plurality of vertical support elements to which the package forming unit is fixedly mounted.

A typical package forming unit comprises a plurality of operative assemblies, a plurality of counter-operative assemblies and a conveying device configured to advance the operative assemblies and the counter-operative assemblies along respective conveying paths. In use, each operative assembly cooperates with one respective counter-operative assembly to form and to transversally cut and seal the tube.

It is known that the operative assemblies and counter-assemblies are realized according to the type and/or format of the packages, which is to be produced. When a packaging machine is to be prepared for the production of packages of a different type and/or format or the package forming unit is to be detached for other reasons, the operative assemblies and counter-operative assemblies must be individually detached followed by the installation of operative assemblies and counter-operative assemblies allowing to obtain packages of the different type and/or format. All these procedures are lengthy leading to increased downtimes of the packaging machine.

It is also known that the package forming unit is arranged within an isolation housing and that frequent cleaning processes of both the isolation housing and the package forming unit must be executed for guaranteeing the required hygienic conditions of the packaging machine. While the isolation housing can tolerate also the use of aggressive cleaning agents, which improve the cleanliness, such as alkaline cleaning agents, this is not true for the package forming unit.

### DISCLOSURE OF INVENTION

It is therefore an object of the present invention to provide a method to overcome, in a straightforward and low-cost manner, at least one of the aforementioned drawbacks.

According to the present invention, there is provided a method as claimed in claim 1.

Preferred non-limiting embodiments of the method are claimed in the dependent claims.

### BRIEF DESCRIPTION OF THE DRAWINGS

A non-limiting embodiment of the present invention will be described by way of example with reference to the accompanying drawings, in which:
Figure 1 is a schematic view of a packaging machine, with parts removed for clarity;
Figure 2 is a schematic side view of a detail of the packaging machine of Figure 1, with parts removed for clarity; and
Figures 3a and 3b are schematic views of a detail of the packaging machine according to two different configurations, with parts removed for clarity.

### BEST MODES FOR CARRYING OUT THE INVENTION

Number 1 indicates as a whole a packaging machine for producing sealed packages 2 of a pourable product, in particular a pourable food product such as pasteurized milk, fruit juice, wine, tomato sauce, etc., from a tube 3 of a web 4 of packaging material. In particular, in use, tube 3 extends along a longitudinal axis, preferentially having a vertical orientation.

Web 4 of packaging material has a multilayer structure (not shown), and comprises at least a layer of fibrous material, such as e.g. a paper or cardboard layer, and at least two layers of heat-seal plastic material, e.g. polyethylene, interposing the layer of fibrous material in between one another. One of these two layers of heat-seal plastic material defines the inner face of package 2 eventually contacting the pourable product.

Preferably but not necessarily, web 4 also comprises a layer of gas- and light-barrier material, e.g. aluminum foil or ethylene vinyl alcohol (EVOH) film, in particular being arranged between one of the layers of the heat-seal plastic material and the layer of fibrous material. Preferentially but not necessarily, web 4 also comprises a further layer of heat-seal plastic material being interposed between the layer of gas- and light-barrier material and the layer of fibrous material.

According to a preferred non-limiting embodiment, web 4 comprises a first face and a second face, in particular the first face being the face of web 4 forming the inner face of the formed package 2 eventually contacting the filled pourable food product.

According to a preferred non-limiting embodiment, a typical package 2 obtained by packaging machine 1 comprises a longitudinal seam portion and a pair of transversal sealing bands, in particular a transversal top sealing band and a transversal bottom sealing band.

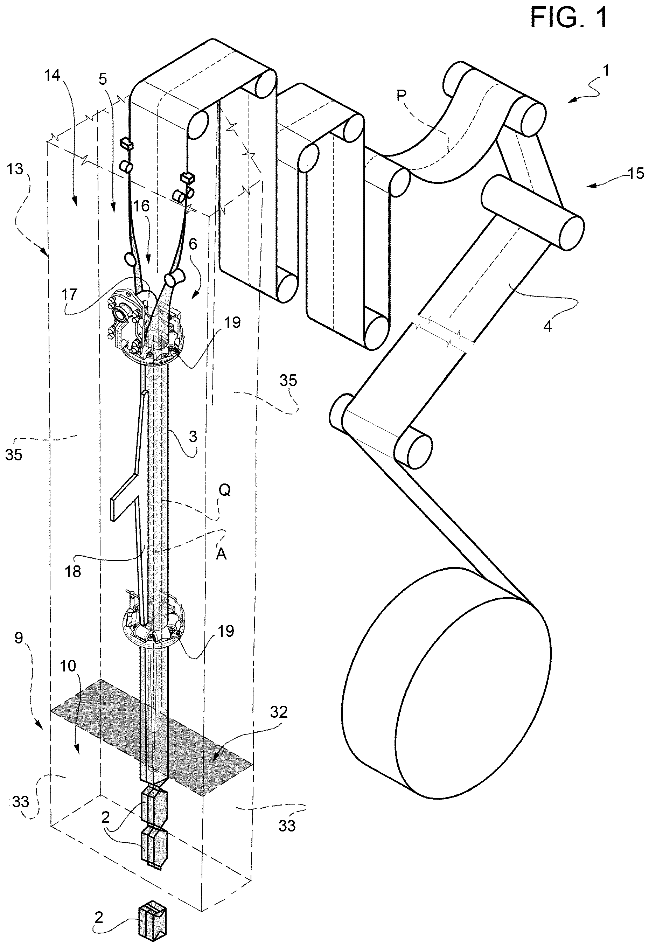

With particular reference to Figure 1, packaging machine 1 at least comprises:
- a tube forming and sealing device 5 configured to form tube 3 from web 4 and to longitudinally seal tube 3 at a tube forming station 6;
- a package forming unit 7 configured to at least form and transversally seal tube 3, preferentially to also transversally cut tube 3, for obtaining packages 2; and
- a support structure 8 carrying, in particularly directly carrying, at least package forming unit 7, and in particular also (at least indirectly) carrying tube forming and sealing device 5.

According to a preferred non-limiting embodiment, packaging machine 1 also comprises at least:
- an isolation housing 9 having an inner space 10 and housing package forming unit 7; and/or
- an isolation chamber 13 having an inner environment 14 and housing at least partially tube forming and sealing device 5; and/or
- a conveying device 15 configured to advance web 4 along a web advancement path P at least to tube forming station 6 and for advancing tube 3 along a tube advancement path Q; and/or
- a filling device 16 for filling tube 3 with the pourable product.

According to a preferred non-limiting embodiment, packaging machine 1 also comprises an atmosphere control unit configured to control at least the atmosphere within inner environment 14, in particular so as to form and longitudinally seal, in use, tube 3 within a controlled sterile atmosphere. In particular, the atmosphere control unit is configured to introduce a sterile gas into inner environment 14 and/or to control a positive pressure within isolation chamber 13 being larger than the ambient pressure.

According to a preferred non-limiting embodiment, packaging machine 1 further comprises a sterilization apparatus for sterilizing at least a portion of web 4, preferentially at least the first face, even more preferentially the first face and the second face, in particular at a sterilization station arranged upstream of tube forming station 6 along web advancement path P. In particular, the sterilization apparatus is configured to sterilize web 4 by means of physical and/or chemical sterilization.

According to a preferred non-limiting embodiment, packaging machine 1 also comprises a magazine unit adapted to host and to provide for web 4 at a host station. In particular, conveying device 5 is configured to advance web 4 from the host station to tube forming station 6.

According to a preferred non-limiting embodiment, support structure 8 carries at least isolation housing 9, in particular also isolation chamber 13.

According to a preferred non-limiting embodiment, isolation housing 9 is arranged downstream of isolation chamber 13 along tube advancement path Q.

According to a preferred non-limiting embodiment, tube forming and sealing device 5 is arranged upstream of package forming unit 7.

Preferentially but not necessarily, conveying device 15 is configured to advance tube 3 and any intermediate of tube 3 in a manner known as such along path Q, in particular from tube forming station 6 through isolation chamber 13, in particular towards, into and at least partially through isolation housing 9. In particular, with intermediates of tube 3 any configuration of web 4 is meant prior to obtaining the tube structure and after folding of web 4 by tube forming and sealing device 5 has started. In other words, the intermediates of tube 3 are a result of the gradual folding of web 4 so as to obtain tube 3, in particular by overlapping opposite lateral edges of web 4 with one another.

With particular reference to Figure 1, filling device 16 comprises at least a filling pipe 17 being in fluid connection or being controllable to be in fluid connection with a pourable product storage tank (not shown and known as such) and partially extending within isolation chamber 13, in particular inner environment 14. In particular, in use, filling pipe 17 is partially placed within tube 3 for feeding the pourable product into the, in use, advancing tube 3.

With particular reference to Figure 1, tube forming and sealing device 5 comprises at least a tube forming assembly configured to form tube 3 from web 4, in particular by overlapping the respective lateral edges of web 4, and at least a sealing head 18 configured to longitudinally seal tube 3, in particular along the portion of tube 3 obtained by the overlapping of the lateral edges of web 4.

Preferentially but not necessarily, the tube forming assembly and sealing head 18 are arranged within isolation chamber 13, in particular within inner environment 14.

Preferentially but not necessarily, the tube forming assembly comprises at least a plurality of forming ring assemblies 19, in the particular example shown two, being adapted to fold web 4 gradually into tube 3. In particular, forming ring assemblies 19 are arranged within parallel and spaced apart planes, in particular being orthogonal to the longitudinal axis of isolation chamber 13, even more specifically having a substantially horizontal orientation.

Preferentially but not necessarily, tube forming and sealing device 5 also comprises a pressuring assembly configured to exert a mechanical force on tube 3, in particular for promoting the longitudinal sealing of tube 3. In particular, the pressuring assembly is associated to the forming ring assembly 19 being arranged downstream of the other forming ring assembly 19 along web advancement path P and/or tube advancement path Q.

According to a preferred non-limiting embodiment, support structure 8 directly carries the tube forming assembly and/or sealing head 18.

Alternatively or in addition, isolation chamber 13 directly carries the tube forming assembly and/or sealing head 18.

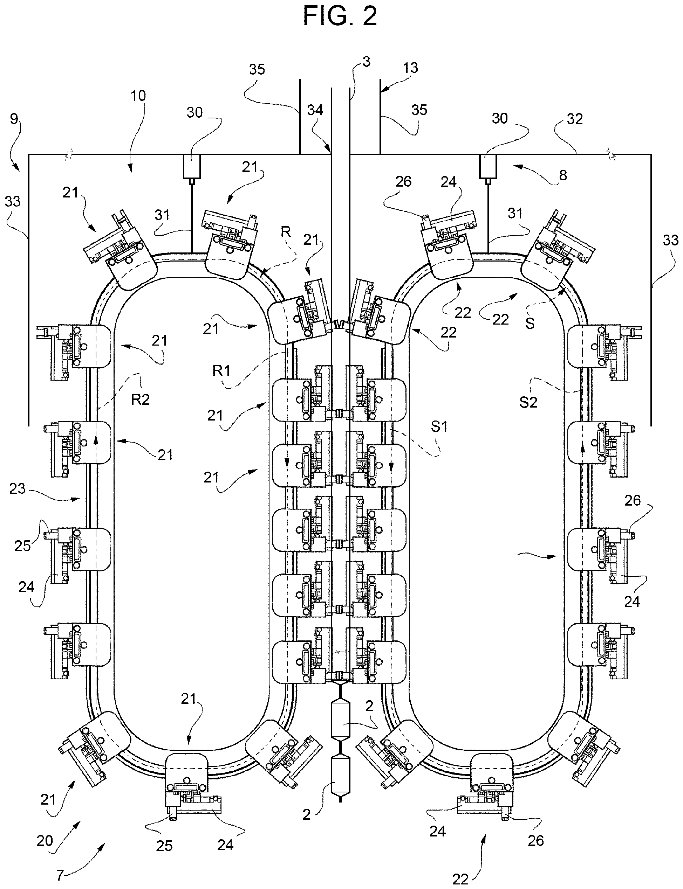

With particular reference to Figure 2, package forming unit 7 comprises at least one operative block 20 having a plurality of operative assemblies 21 and a plurality of counter-operative assemblies 22; and
- in particular, at least one conveying unit 23 adapted to advance operative assemblies 21 and counter-operative assemblies 22 along respectively a(n) (endless) conveying path R and a(n) (endless) conveying path S.

Preferentially but not necessarily, each operative assembly 21 is adapted to cooperate, in use, with one respective counter-operative assembly 22 for obtaining a respective package 2 from tube 3. In particular, each operative assembly 21 and the respective counter-operative assembly 22 are configured to form, to transversally seal and, preferably but not necessarily also to transversally cut, tube 3 for forming the respective package 2.

According to a preferred non-limiting embodiment, the conveying unit 23 is configured to advance operative assemblies 21 and counter-operative assemblies 22 along respectively an operative portion R1 of conveying path R and an operative portion S1 of conveying path S and respectively a return portion R2 of conveying path R and a return portion S2 of conveying path S. In particular, operative assemblies 21 and the respective counter-assemblies 22 advance, in use, respectively along operative portion R1 and operative portion S1 when forming in cooperation with one another the respective package 2. Even more particular, return portion R2 and return portion S2 allow, in use, for bringing respectively operative assemblies 21 and counter-operative assemblies 22 back to respectively operative portion R1 and operative portion S1.

Preferentially but not necessarily, each operative assembly 21 and the respective counter-operative assembly 22 are configured to contact tube 3 when advancing along respectively operative portion R1 and operative portion S1, in particular starting to contact tube 3 at a (fixed) hit position.

Preferentially but not necessarily, each operative assembly 21 and each counter-operative assembly 22 comprises at least
- a half-shell 24 adapted to contact tube 3 and to at least partially define the shape of packages 2;
- one of a sealing element 25 and a counter-sealing element 26, adapted to transversally seal tube 3 in a known manner, in particular between adjacent packages 2; and
- preferably but not necessarily, one of a cutting element (not shown and known as such) and a counter-cutting element (not shown and known as such) for transversally cutting tube 3, in particular between adjacent packages 2, in a manner known as such.

Preferentially but not necessarily, each half-shell 24 is adapted to be controlled between a working position and a rest position by means of a driving assembly (not shown). In particular, each half-shell 24 is adapted to be controlled into the working position with the respective operative assembly 21 or the respective counter-operative assembly 22, in use, advancing along respectively operative portion R1 and operative portion S1.

Preferentially but not necessarily, each sealing element 25 and each counter-sealing element 26 is adapted to be controlled between an active sealing position in which sealing element 25 and counter-sealing element 26 are in contact with tube 3 and are adapted to transversally seal in cooperation with one another tube 3 and a rest position in which sealing element 25 and counter-sealing element 26 are detached from tube 3. In particular, each sealing element 25 and each counter-sealing element 26 is adapted to be controlled into the sealing position with the respective operative assembly 21 or the respective counter-operative assembly 22, in use, advancing along respectively operative portion R1 and operative portion S1.

Preferentially but not necessarily, each half-shell 24 is configured to be controlled into the respective working position with the respective sealing element 25 and counter-sealing element 26 being controlled into the respective active position.

With particular reference to Figure 2, support structure 8 comprises one or more (fixed) fixing elements 30 configured to allow for removably connecting package forming unit 7, in particular operative block 20, to support structure 8 so that support structure 8 carries package forming unit 7, in particular operative block 20.

Advantageously, package forming unit 7, in particular operative block 20, comprises one or more coupling elements 31 configured to structurally connect package forming unit 7, in particular operative block 20, to support structure 8. In particular, each coupling element 31 is configured to removably engage and/or removably engages with one respective fixing element 30.

In other words, fixing elements 30 and coupling elements 31 are configured to removably connect package forming unit 7 to support structure 8.

According to a preferred non-limiting embodiment, support structure 8 comprises a plane support base 32, in particular a (rigid) plane support plate, to which fixing elements 30 are (fixedly) mounted. In particular, in such a manner fixing elements 30 allow that plane support base 32 carries package forming unit 7.

Preferentially but not necessarily, plane support base 32 extends within a horizontal plane, in particular being spaced apart from a horizontal support surface onto which packaging machine 1 is installed.

According to a preferred non-limiting embodiment, fixing elements 30 are mounted to plane support base 32 at a first side thereof, in particular a lower side, even more particular facing the horizontal support surface, , in particular so that package forming unit 7, in particular operative block 20, suspends (and/or hangs) from plane support base 32.

According to a preferred non-limiting embodiment, plane support base 32 carries isolation chamber 13.

Preferentially but not necessarily, isolation chamber 13 is arranged on plane support base 32 at a second side (opposed to the first side) thereof, in particular an upper side, and transversally, in particular perpendicularly, extends from the second side.

According to a preferred non-limiting embodiment, support structure 8 also comprises a main frame (not shown) carrying plane support base 32. In particular, the main frame being configured to be placed onto a horizontal surface of a production site.

According to a preferred non-limiting embodiment, isolation housing 9 comprises a plurality of delimiting walls 33 delimiting inner space 10.

Preferentially but not necessarily, delimiting walls 33 are mounted onto the main frame.

According to a possible non-limiting embodiment, plane support base 32 is constructed from a plurality of plate pieces or is realized as a single piece.

According to a preferred non-limiting embodiment, plane support base 32 at least partially delimits inner environment 14 and inner space 10.

According to a preferred non-limiting embodiment, plane support base 32 carries and/or comprises an aperture 34 configured to enable the passage of tube 3 from inner environment 14 into inner space 10.

It should be noted that fixing elements 30 and coupling elements 31 allow for removably connecting package forming unit 7, in particular operative block 20, as a whole to support structure 8, in particular support base 32. In particular, as a whole means that operative assemblies 21 and counter-operative assemblies 22 are not dismounted one after the other, but by simply releasing coupling elements 31 from fixing elements 30 and the removal of operative block 30 together with all operative assemblies 21 and counter-operative assemblies 22.

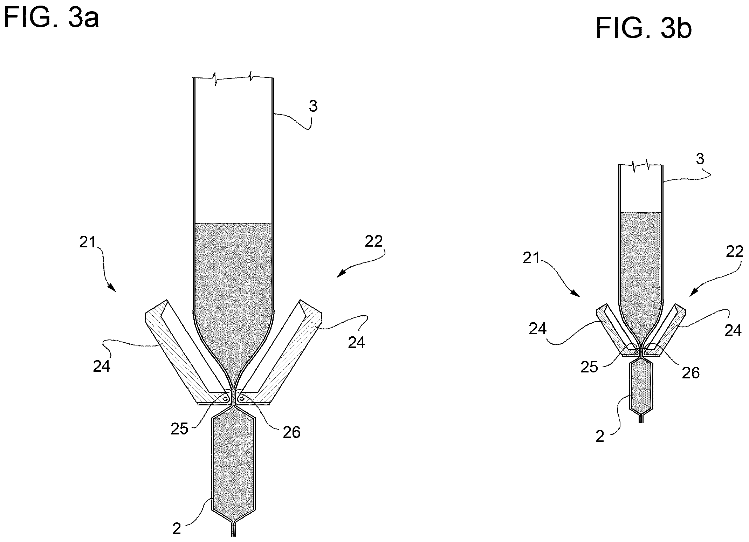

With particular reference to Figures 3a and 3b, it is known that packages 2 can be provided according to a variety of types and/or formats. Packages 2 can vary e.g. in the volume of pourable product, which packages 2 can contain, their longitudinal and transversal dimensions, their specific shape and other features.

According to a preferred non-limiting embodiment, package forming unit 7 is configured to produce packages 2 of a first type and/or format. In particular, operative block 20, even more particular operative assemblies 21 and counter-operative assemblies 22, define (at least partially) the type and/or format of packages 2.

It should be noted that it is possible to remove package forming unit 7 from support structure 8 and to attach a replacement package forming unit to support structure 8. In particular, this can be achieved by respectively detaching and attaching respective coupling elements 31 respectively from and to the respective fixing elements 30.

According to one non-limiting embodiment, the replacement package forming unit corresponds to package forming unit 7 itself; i.e. package forming unit 7 is attached to support structure 8 again after having been detached. This is advantageous, if e.g. one intends to clean second isolation chamber 27 and/or second inner environment 28 in the absence of package forming unit 7 and to re-stablish production of packages 2 by package forming unit 7.

According to another non-limiting embodiment, the replacement package forming unit is distinct from package forming unit 7 and is configured to form and seal tube 3 for obtaining packages 2 of the first type and/or format. This can be advantageous, if one needs to apply a significant and/or time-consuming maintenance activity on package forming unit 7, but production of packages 2 of the first type and/or format needs to be resumed as soon as possible. In addition, this may happen if a worn-out, or broken, package forming unit 7 has to be replaced with a new package forming unit of the same kind.

According to such a non-limiting embodiment, the replacement forming unit is identical constructed to package forming unit 7.

According to a further non-limiting embodiment, replacement package forming unit is distinct from package forming unit 7 and is configured to form and seal tube 3 for obtaining packages 2 of a second type and/or format distinct from the first type and/or format. This is advantageous, if one wants to produces packages 2 of a new type and/or format.

Preferentially but not necessarily according to such a non-limiting embodiment, also tube forming and sealing device 5 is replaced with a respective replacement tube forming and sealing device 5 according to such a non-limiting embodiment.

According to such a non-limiting embodiment, the replacement package forming unit is similar to package forming unit 7 and, therefore, the following description only discloses the differences between the replacement package forming unit according to the last-mentioned embodiment and package forming unit 7 using the same reference numerals for similar or equivalent parts.

In particular, the replacement package forming unit differs from package forming unit 7 in being configured to form and/or produce packages 2 according to the second type and/or format distinct from the first type and/or format.

In particular, the respective operative block 20, even more particular the respective operative assemblies 21 and the respective counter-operative assemblies 22, are configured to produce and/or form packages 2 of the second type and/or format.

Even more particular, the respective half-shells 24 and/or sealing elements 25 and/or counter-sealing elements 26 of the respective operative assemblies 21 and counter-operative assemblies 22 differ from the ones of package forming unit 7, so as to be adapted to form packages 2 of the second type and/or format.

Overall, by providing for fixing elements 30 an exchange from package forming unit 7 to the replacement package forming unit (according to any one of the above-mentioned embodiments) is facilitated.

According to a preferred non-limiting embodiment, fixing elements 30 and coupling elements 31 (of both package forming unit 7 and the replacement package forming unit (independently of the above-mentioned embodiments)) are arranged such that package forming unit 7, in particular operative block 20, or the replacement package forming unit, in particular the respective operative block 20, are aligned, in particular centered, with respect to aperture 34. In other words, fixing elements 30 and coupling elements 31 are realized such to obtain a self-centering of package forming unit 7, in particular operative block 20, or the replacement package forming unit, in particular the respective operative block 20

According to a preferred non-limiting embodiment, fixing elements 30 and coupling elements 31 are arranged such that package forming unit 7 or the replacement package forming unit is positioned in such a manner that tube 3 advancing along path Q is centered with respect to operative assemblies 21 and the respective counter-operative assemblies 22, in particular when advancing along respectively operative portion R1 and operative portion S1. In this way, it is guaranteed that the respective operative assemblies 21 and the respective counter-operative assemblies 22 start to simultaneously engage with tube 3 at the respective hit position.

According to a preferred non-limiting embodiment, after the exchange of package forming unit 7 with the replacement package forming unit the respective hit position of the respective operative assemblies 21 and the respective counter-operative assemblies 22 is automatically adopted to the second type and/or format of packages 2 to be produced.

According to a preferred non-limiting embodiment, fixing elements 30 are non-removably fixed to the first side of plane support base 32.

According to a preferred non-limiting embodiment, isolation chamber 13 extends along a longitudinal axis A, in particular having a vertical orientation and comprises a plurality of delimiting walls 35 delimiting inner environment 14.

Preferentially but not necessarily, delimiting walls 35 are mounted to plane support base 32 and transversally, in particular orthogonally, extend away from plane support base 32.

In use, packaging machine 1 produces packages 2 of a pourable product. In particular, packaging machine 1 forms tube 3 from web 4, longitudinally seals tube 3, fills tube 3 with the pourable product and forms, transversally seals and transversally cuts tube 3 so as to obtain packages 2.

In particular, conveying device 15 advances web 4 along web advancement path P.

In particular, the sterilization apparatus sterilizes web 4 at the sterilization station.

According to a preferred non-limiting embodiment, tube forming and sealing device 5 forms web 4 into tube 3 and longitudinally seals tube 3, in particular within inner environment 14.

According to a preferred non-limiting embodiment, package forming unit 7 forms, transversally seals, and in particular transversally cuts tube 3 for obtaining packages 2, in particular within inner space 10.

It should be noted that prior to operation of packaging machine 1, packaging machine 1 can be prepared for operation.

Advantageously, it is possible, to exchange package forming unit 7 with the replacement package forming unit, in particular so that packaging machine 1 produces packages 2 of the first type and/or format or packages 2 of the second type and/or format (in dependence of the specific embodiment) after termination of the preparation of packaging machine 1.

Advantageously, the method for preparing packaging machine 1 comprises at least the steps of:
- detaching package forming unit 7 by releasing coupling elements 31 from the respective fixing elements 30; and
- attaching the replacement package forming unit by removably engaging each one of the respective coupling elements 31 to the respective fixing elements 30.

According to a preferred non-limiting embodiment, during the step of detaching, package forming unit 7 is removed from isolation housing 9, in particular from inner space 10.

According to a preferred non-limiting embodiment, during the step of detaching, package forming unit 7, in particular operative block 30, is released from support structure 8, in particular from plane support base 32, as a whole.

According to a preferred non-limiting embodiment, during the step of attaching, the replacement package forming unit is introduced into isolation housing 9, in particular into inner space 10.

According to a preferred non-limiting embodiment, during the step of attaching, the replacement package forming unit, in particular operative block 20, is connected (by means of fixing elements 30 and coupling elements 31) to support structure 8, in particular plane support base 32, as a whole.

Preferentially but not necessarily, during the step of attaching, the replacement package forming unit is aligned, in particular centered, with respect to aperture 34 as determined by the arrangement and/or position of fixing elements 30 and interaction elements 31.

Preferentially but not necessarily, the method further comprises the step of cleaning and/or sterilizing inner space 10. In particular, during the step of cleaning and/or sterilizing any surface being positioned within inner space 10 (e.g. also the inner surfaces of delimiting walls 35) is cleaned and/or sterilized.

According to a preferred non-limiting embodiment, the step of cleaning and/or sterilizing is a cleaning-in-place cycle.

According to a preferred non-limiting embodiment, the step of cleaning and/or sterilizing is executed after the step of detaching and prior to the step of attaching. In this manner, it is possible to clean and/or sterilize inner space 10 without the presence of significantly sized obstacles.

According to a preferred non-limiting embodiment, during the step of cleaning and/or sterilizing, a cleaning agent is injected into the inner space.

Preferentially but not necessarily, during the step of cleaning and/or sterilizing, the cleaning agent is chosen in dependence on whether package forming unit 7 or whether the replacement package forming unit is arranged or not within isolation housing 9, in particular inner space 10. In particular, in the absence of package forming unit 7 and the replacement package forming unit the cleaning agent can be chosen to be more aggressive (e.g. an alkaline cleaning agent) than when executing the step of cleaning and/or sterilizing in the presence of package forming unit 7 or the replacement package forming unit.

According to a preferred non-limiting embodiment, the method further comprises the step of replacing tube forming and sealing device 5, during which tube forming and sealing device 5 is replaced with a replacement tube forming and sealing device 5.

The advantages of the method according to the present invention will be clear from the foregoing description.

In particular, it is possible to execute operations, which require the dismounting of package forming unit 7 and the mounting of the replacement forming unit in a facilitated and accelerated manner.

A further advantage resides in the possibility to dismount and remount package forming unit 7 so as to execute a cleaning of second isolation chamber 27 in the absence of package forming unit 7.

Another advantage resides in having the possibility to quickly exchange package forming unit 7 with the replacement package forming unit of the same or a different type.

A further advantage resides in that the fixing elements 30 and coupling elements 31 self-align package forming unit 7, thereby eliminating any lengthy alignment operations.

Another advantage resides in the possibility to clean and/or sterilize inner space 10 between the step of detaching and the step of attaching. This is particularly advantageous, considering the possibility of using more aggressive cleaning agents in the absence of any significant and sensitive obstacles within inner space 10 during the step of cleaning and/or sterilizing.

Clearly, changes may be made to the method as described herein without, however, departing from the scope of protection as defined in the accompanying claims.

## Claims

1. Method for preparing a packaging machine (1) for producing packages (2) of a pourable product;
the packaging machine (1) comprises at least:
- a tube forming and sealing device (5) configured to form and longitudinally seal a tube (3) from a web (4) of packaging material;
- a first package forming unit (7) being configured to at least form and transversally seal the tube (3) for obtaining packages (2); and
- a support structure (8) carrying at least the first package forming unit (7);
wherein the support structure (7) comprises at least one fixing element (30) and the first package forming unit (7) comprises at least one coupling element (31) removably engaging with the fixing element (30);
the method comprises at least the steps of:
- detaching the first package forming unit (7) by releasing the coupling element (31) from the fixing element (30);
- attaching a replacement package forming unit being configured to form and transversally seal the tube (3) for obtaining packages (2) by removably engaging a respective coupling element (31) of the replacement package forming unit to the fixing element (30).

2. Method according to claim 1, wherein the packaging machine comprises at least an isolation housing (9);
wherein the first package forming unit (7) is arranged within the isolation housing (7);
wherein during the step of detaching, the first package forming unit (7) is removed from the isolation housing (9); and
wherein during the step of attaching, the replacement package forming unit is introduced into the isolation housing (7).

3. Method according to claim 2, and further comprising the step of cleaning and/or sterilizing an inner space (10) of the isolation housing (9).

4. Method according to claim 3, wherein the step of cleaning and/or sterilizing is executed after the step of detaching and prior to the step of attaching.

5. Method according to claim 3 or 4, wherein during the step of cleaning and/or sterilizing, a cleaning agent is injected into the inner space (10).

6. Method according to claim 5, wherein during the step of cleaning and/or sterilizing, the cleaning agent is chosen in dependence of whether the first package forming unit (7) or whether the replacement package forming unit is arranged or not within the isolation housing (9).

7. Method according to any one of the preceding claims, wherein the support structure (8) comprises at least a plane support base (32) carrying the fixing element (30) so as to carry and to suspend the first package forming unit (7) or the replacement package forming unit from the plane support base (32).

8. Method according to claim 7, wherein the plane support base (32) comprises an aperture (34) and the fixing element (30);
wherein the fixing element (30) and the respective coupling element (31) are configured to align respectively the first package forming unit (7) or the replacement package forming unit with respect to the aperture (34).

9. Method according to any one of the preceding claims, wherein each one of the first package forming unit (7) and the replacement package forming unit comprises a respective operative block (30) having a plurality of operative assemblies (21) and a plurality of counter-operative assemblies (22);
wherein each operative assembly (21) is configured to at least form and transversally seal the tube (3) in cooperation with one respective counter-operative assembly (22);
wherein each operative block (30) comprises the respective coupling element (31);
wherein during the step of detaching, the respective operative block (20) of the first package forming unit (7) is detached as a whole; and
wherein during the step of attaching, the respective operative block (20) of the replacement forming unit is attached as a whole.

10. Method according to claim 9, wherein each operative block (20) also comprises a respective conveying device (23) for conveying the respective operative assemblies (21) and the respective counter-operative assemblies (22) along respective conveying paths (R, S).

11. Method according to any one of the preceding claims, wherein the replacement package forming unit corresponds to the first package forming unit (7).

12. Method according to any one of claims 1 to 10, wherein the first package forming unit (7) is configured to at least form and transversally seal the tube (3) for obtaining packages (2) of a first type and/or format;
wherein the replacement package forming unit is distinct from the first package forming unit (7) and is configured to at least form and transversally seal the tube (3) for also obtaining packages (2) of the first type and/or format.

13. Method according to any one of claims 1 to 10, wherein the first package forming unit (7) is configured to at least form and transversally seal the tube (3) for obtaining packages (2) of a first type and/or format;
wherein the replacement package forming unit is configured to at least form and transversally seal the tube (3) for obtaining packages (2) of a second type and/or format distinct from the first type and/or format.
